(19) **Europäisches Patentamt / European Patent Office / Office européen des brevets**

(11) **EP 2 559 745 A1**

(12) # EUROPEAN PATENT APPLICATION
published in accordance with Art. 153(4) EPC

(43) Date of publication:
**20.02.2013 Bulletin 2013/08**

(21) Application number: **11768688.1**

(22) Date of filing: **10.03.2011**

(51) Int Cl.:
*C09J 7/02* (2006.01)   *B32B 27/28* (2006.01)
*B32B 27/32* (2006.01)   *C09J 123/08* (2006.01)

(86) International application number:
**PCT/JP2011/055627**

(87) International publication number:
**WO 2011/129167 (20.10.2011 Gazette 2011/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.04.2010 JP 2010091947**

(71) Applicant: **Toray Advanced Film Co., Ltd.**
**Chuo-ku**
**Tokyo 103-0021 (JP)**

(72) Inventors:
• **ASADA, Yoshiyasu**
**Takatsuki-shi**
**Osaka 569-0807 (JP)**

• **TERAUCHI, Hiroshi**
**Nakatsugawa-shi**
**Gifu 509-9132 (JP)**
• **IMAI, Shiro**
**Takatsuki-shi**
**Osaka 569-0807 (JP)**

(74) Representative: **Kador & Partner**
**Corneliusstrasse 15**
**80469 München (DE)**

(54) **SURFACE PROTECTIVE FILM**

(57) The invention provides a surface protective film having a laminated structure including an adhesive layer, a back layer, and a middle layer, that does not cause an increase in adhesion strength to optical films, such as polarizers and retardation films, which must achieve a high standard of quality so that adherends will suffer from no dents or no deformation caused particularly by minute fisheye defects and roll-up creases. Furthermore, the surface protective film does not contaminate adherends, nor cause any defects such as dents and deformations in adherends.

To solve the abovementioned problem, the present invention employs the following means. Specifically, the surface protective film of the present invention comprises a three-layer laminated structure including an adhesive layer, a middle layer and a back layer, wherein the adhesive layer is formed from an ethylene-$\alpha$-olefin copolymer, an ethylene-methyl methacrylate copolymer, or a mixture thereof, the middle layer is formed primarily from a polyethylene-based resin having a density of 0.870-0.935 g/cm$^3$, an ethylene-methyl methacrylate copolymer, or a mixture thereof; and the back layer is formed from a polypropylene-based resin and a low-density polyethylene. The back layer has a surface with an arithmetic average roughness (Ra) of 0.6 $\mu$m or more and a ten-point average roughness (Rz) of 4 $\mu$m or more.

**EP 2 559 745 A1**

**Description**

[Technical Field]

The present invention relates to a surface protective film which is used by temporarily adhering it to surfaces of various types of optical films, such as polaraizers and retardation films, which are used mainly in the optical field. In particular, the present invention relates to a surface protective film which is characterized in that fisheyes and roll-up creases do not occur in said surface protective film to cause defects, such as dents and deformations, in an adherend, and that said surface protective film does not contaminate the adherend.

[Background Art]

Surface protective films are required to have an adhesive function which withstands severe use conditions, yet provides an adhesion strength small enough to peel off the surface protective films easily after the surface protective films have fulfilled the surface protection function thereof. Furthermore, surface protective films must not contaminate adherends or leave any trace thereof on the adherends. When used for optical purposes, it is particularly emphasized that as well as not contaminating adherends, protruding defects such as fisheyes, and roll-up creases, of surface protective films must not occur to cause defects, such as dents and deformations, in adherends. In recent years, this requirement has become more stringent than ever before and does not even allow any defect to occur in any adherend after a surface protective film is adhered to the adherend and the film-protected adherend is taken up in a roll form and stored for a long period of time, during which pressure possibly generated by the tightness of the roll may create subsequently causing dents and deformations by protruding defects of microfine fisheyes and roll-up creases.

Incidentally, surface protective films are normally provided in rolls, and are essentially required to have good slidability between the adhesive layer and the back layer thereof, excellent non-blocking characteristics (easy to wind off), workability that enables steady adhesion to adherends, and excellent processability.

As described above, surface protective films need to have material characteristics for fulfilling active and inactive functions simultaneously, and a wide variety of suggestions and proposals have been made to meet these required characteristics.

As a means of preventing an increase of the adhesion strength of surface protective films during a process, such as high-temperature processing, many have suggested the use of an ethylene-$\alpha$-olefin copolymer in the adhesive layer of surface protective films (patent documents 1, 2, and 3).

In addition, as a method for making it easier to wind off a surface protective film, a suggestion, such as adding inorganic particles to a thermoplastic resin constituting the substrate layer of a surface protective film, has also been made (patent document 4).

Moreover, a surface protective film, in a state of being adhered to an adherend, typically undergoes processes, such as punching, drawing, cutting and polishing. There have been various suggestions for improving the secondary processability of surface protective films in such secondary processes, but the suggestions all have advantages and disadvantages. A solution is notyet to be found for satisfying mixed characteristics of surface protective films, and the present inventors have also made yet another new proposal to satisfy such mixed characteristics (patent document 5).

Furthermore, the use of a polyethylene-based resin for a substrate layer (patent document 6) and the use of a polypropylene-based for a substrate layer (patent document 7) have been suggested in an effort to meet the increasingly-stringent requirement and solve the problem of defects, such as dents, in adherends, which are caused by protruding defects, such as fisheyes, which develop in surface protective films, but no proposals have been furthered to reach the level of eliminating dents in adherends, which are caused by minute fisheyes in surface protective films.

More specifically, the use of low-density polyethylene and the like for the substrate layer of a surface protective film was proposed in patent document 6, but the proposal itself could not facilitate the complete elimination of actual fisheyes; even with a substrate layer which was made of a comparatively flexible resin, when a surface protective film was adhered to an adherend, such as a retardation film having a very smooth surface, and the film-protected adherend was stored in a roll form for a long period of time, fisheyes in the surface protective film still not managed to develop bulging (protruding) portions which generated stress concentration, thereby creating dent defects in the adherend. It was therefore proven to be still difficult to eliminate fisheye-induced dents in adherends. Moreover, the use of a polypropylene-based resin for the substrate layer of a surface protective film to reduce the actual number of fisheyes therein was proposed in patent document 7. However, although the proposed polypropylene-based resin for the substrate layer enabled the reduction of the actual number of fisheyes, there was a tendency that the hard and poor cushioning characteristics of the polypropylene-based resin for the substrate adversely contributed to creating dents in an adherend, when fisheyes were present, more severely than when using a polyethylene-based resin for the substrate layer.

In addition, the surface protective film proposed by the present inventors (patent document 5) achieved a high standard of quality that satisfied the stringent requirement for no dents and deformations caused in adherends by minute fisheye defects and roll-up creases, but the proposed film was not satisfactory for application to all types of optical films. In particular, the proposed film could not always prevent the occurrence of dents in an adherend caused by protrusions of minute fisheyes after the film was adhered to the adherend, which was taken up in a roll form and stored for a long period of time.

[Prior Art Documents] [Patent Documents]

[Patent Document 1]
JP HEI03-47886 A
[Patent Document 2]
JP HEI04-55488 A
[Patent Document 3]
JP HEI05-239418 A
[Patent Document 4]
JP SHO55-165974 A
[Patent Document 5]
JP 2008-30349 A
[Patent Document 6]
JP HEI09-111208 A
[Patent Document 7]
JP 2009-143215 A

[Summary of the Invention]

[Problem to be Solved by the Invention]

Provided is a surface protective film having a laminated structure including an adhesive layer, a back layer, and a middle layer, wherein the surface protective film does not cause an increase in adhesion strength with respect to optical films, such as polarizers and retardation films, which must achieve a high standard of quality so that adherends have no dents and no deformations caused particularly by minute fisheye defects and roll-up creases; and the surface protective film does not contaminate adherends; nor does the surface protective film cause any defects, such as dents and deformations, in adherends.

The practical use of surface protective films concerns many different conditions of use and quality requirements, and not only do surface protective films need to be technically smooth and easy to handle under such conditions of use, surface protective films need to satisfy such quality requirements in order to serve the ultimate purpose thereof.

For this reason, it goes without saying that various processing characteristics and basic handling performance of surface protective films are important, not to mention adhesion functions, and it is also important that surface protective films must not contaminate adherends or create fisheyes and creases to cause defects, such as dents, in adherends. These are the latest quality requirements imposed particularly on optical films, such as polarizers and retardation films. In the light of the background of the prior art, as described above, the present invention provides a surface protective film which has good slidability and appropriate blocking characteristics, and is robust yet flexible and easy to handle, while satisfying basic adhesion characteristics with little increase in adhesion strength as well as meeting the latest stringent requirement by hardly developing any fisheyes or roll-up creases to cause dents or deformations in an adherend when stored in a roll form for a long period of time.

[Means for Solving the Problem]

In order to solve the abovementioned problem, the present invention employs the following means. To be more specific, the surface protective film of the present invention is characterized by having a three-layer laminated structure including an adhesive layer, a middle layer and a back layer; that the adhesive layer is formed from an ethylene-$\alpha$-olefin copolymer, an ethylene-methyl methacrylate copolymer, or a mixture thereof; that the middle layer is formed primarily from a polyethylene-based resin having a density of 0.870-0.935 g/cm$^3$, an ethylene-methyl methacrylate copolymer, or a mixture thereof; that the back layer is formed from a polypropylene-based resin and a low-density polyethylene; and that the back layer has a surface with an arithmetic average roughness (Ra) of 0.6 $\mu$m or more and a ten-point average roughness (Rz) of 4 $\mu$m or more.

Furthermore, the surface protective film of the present invention is characterized in that the melt flow rate of the polypropylene-based resin constituting the back layer of the surface protective film is preferably 5-50 g/10 min. at a temperature of 230°C and under a load of 2.16 kg/cm$^2$; and that the melt flow rate of the low-density polyethylene is preferably 0.5-5 g/10 min. at a temperature of 190°C and under a load of 2.16 kg/cm$^2$.

Moreover, the surface protective film of the present invention is characterized by preferably having a three-layer laminated structure including an adhesive layer, a middle layer and a back layer; and that the middle layer is formed from a mixed composition of a polyethylene-based resin having a density of 0.870-0.935 g/cm$^3$, an ethylene-methyl methacrylate copolymer, or a mixture thereof, and the resin constituting the adhesive layer and the resin composition constituting the back layer.

[Effect of the Invention]

The present invention solves the abovementioned problem and provides a reproducible surface protective film wherein the surface protective film is easy to rewind at the time of being wound off and adhered to an adherend; is robust yet flexible; and has excellent processing characteristics, and therefore is easy to handle during the process of adhesion to an adherend. Furthermore, the surface protective film does not cause defects, such as dents and deformations, by fisheyes and various kinds of film creases, or contaminate an adherend, which is a requirement imposed particularly on optical films, such as polarizers and retardation films.

[Mode for Carrying Out the Invention]

The detailed description of the present invention is as follows:

The present invention intensely investigates the abovementioned problem, i.e. a surface protective film in terms of adhesion strength, various processing characteristics, and handling performance (surface characteristics) which are represented by blocking characteristics, and particularly in terms of not causing defects, such as dents and deformations, by protruding defects, such as fisheyes and various kinds of film creases, and contamination in an adherend. The present invention subsequently seeks to solve the problem at once by providing a surface protective film having a particular laminated structure including an adhesive layer, a middle layer and a back layer, which is capable of relaxing the stress concentration of protrusions by bulges, such as fisheyes.

Firstly, the requirements for the adhesive layer of the present invention are as follows:

The adhesive layer of the present invention is formed from an ethylene-$\alpha$-olefin copolymer, an ethylene-methyl methacrylate copolymer, or a mixture thereof. Ethylene-$\alpha$-olefin copolymer refers to linear low-density polyethylene or ultra-low-density polyethylene. The type of $\alpha$-olefin, which is a comonomer, is not particularly specified, but examples of $\alpha$-olefins include butene-1, hexen-1, 4-methylpentene-1, and octene-1. The applicable density of said ethylene-$\alpha$-olefin copolymer may be 0.870-0.935 g/cm$^3$, but when characteristics which do not allow adhesion strength to increase during high temperature processing at a temperature of 120°C or more are required, it is particularly preferable that said ethylene-$\alpha$-olefin copolymer has a density of 0.910-0.935 g/cm$^3$ together with a main melting point peak of 100-130°C in order to obtain excellent adhesion characteristics for not contaminating the surface of an adherend, stabilizing the adhesion to the adherend, and preventing adhesion strength from increasing during high-temperature processing. The density and the melting point of an ethylene-$\alpha$-olefin copolymer such as the above are determined by a distribution of short chain branches of the $\alpha$-olefin and the crystalline state created thereby. Structural factors of an ethylene-$\alpha$-olefin copolymer include the average molecular weight and molecular weight distribution thereof, and other factors including the type and degree of short-chain branching and composition distribution. Density and melting point requirements can be determined with a comonomer content being as little as 10 mol%. An ethylene-$\alpha$-olefin copolymer such as the above sometimes indicates a plurality of melting point peaks, but in the present invention, melting point peak refers to the main melting point peak which is obtained from differential scanning calorimetry (DSC) curves representing melting measurements using a differential scanning calorimeter. An ethylene-$\alpha$-olefin copolymer which can be obtained either by a conventional polymerization method using a multisite catalyst or by a polymerization method using a single-site catalyst (e.g. Kaminsky catalyst and metallocene catalyst) may be used in the present invention.

Other compoundable components are other polyolefins, olefin copolymers, and aliphatic compounds or cyclic compounds, and it is preferred that the use of these components is limited to the minimum amount required. Incorporating these components in an amount more than necessary could cause contamination in an adherend.

Another requirement specified by the present invention is the use of an ethylene-methyl methacrylate copolymer ("MMA copolymer" hereinafter) which is a resin obtained by copolymerizing ethylene and methyl methacrylate ("MMA" hereinafter). A copolymer containing 5 to approx. 40 wt% MMA is available but a copolymerized MMA content of 5-20 wt% is preferable as an adhesive layer resin material, and a copolymerized MMA content of 10-15 wt% is even more preferable. Obtaining a desired adhesion strength becomes difficult when the copolymerized MMA content falls below 5 wt%, and with the copolymerized MMA content exceeding 20 wt%, the melting point drops too low, thus reducing heat resistance.

The abovementioned ethylene-α-olefin copolymer and ethylene-methyl methacrylate copolymer may be used individually to form the adhesive layer, or prepared together, as appropriate, at an arbitrary ratio to achieve a desired adhesion strength.

Incidentally, adding an antioxidant in an amount of 500-3,000 ppm is a favorable approach with the purpose of controlling thermal degradation during the extrusion molding of the abovementioned ethylene-α-olefin copolymer and ethylene-methyl methacrylate copolymer while preventing the occurrence of gels which subsequently form cores of fisheyes, but adding an antioxidant in an excessive amount could cause contamination in an adherend. Therefore it is preferable that the use of an added antioxidant is limited to the minimum amount required. Examples of antioxidants include phenol-based, aromatic amine-based, thioether-based and phosphorus-based antioxidants, and it is preferable to use two or more kinds of antioxidants together to enhance the effect thereof by mixing a small amount of each. A preferable example is the combined use of a phenol-based antioxidant and a phosphorus-based antioxidant.

In addition, a tackifier, such as a terpenic compound, may be added to the adhesive layer for increasing the adhesion strength thereof, but as explained hereinafter, an adequate adhesive force can be obtained without a tackifier, particularly when the adhesive layer is used for an adherend, such as a polarizers or a retardation film, which has a smooth surface. Incidentally, examples of tackifiers include polyterpenes having structural units of α-pinene, β-pinene, dipentene, etc., and hydrogenated compounds (hydrogenated terpene resins) thereof; modification products thereof including terpene styrene resin and terpene phenol resin; rosins including rosin, polymerized rosin, hydrogenated rosin, and rosin modified products; and derivatives including glycerol ester and pentaerythritol ester of rosins or hydrogenated rosins.

The surface of the adhesive layer of the present invention, which is formed from a composition such as the above, preferably has a surface with an arithmetic average roughness (Ra) of 0.2 μm or less and a ten-point average roughness (Rz) of 2 μm or less, in accordance with JIS B0601-1994, to form a smooth surface. Smoothing an adhesive layer such as this enables fine adhesion to an adherend without trapped air bubbles, particularly when the adherend is an optical film, such as a polarizer or a retardation film, having a smooth surface. An adhesive layer having a rougher surface with an Ra exceeding 0.2 μm and an Rz exceeding 2 μm is not desirable, because the adhesion of the adhesive layer to an adherend becomes weak, thus causing the adhesive layer to separate from the adherend while processing the adherend and during storage.

Next, the requirements for the middle layer of the present invention are as follows:

To be more specific, the middle layer is formed from a polyethylene-based resin having a density of 0.870-0.935 g/cm$^3$, an ethylene-methyl methacrylate copolymer, or a mixture thereof. Examples of polyethylene-based resins such as the above include high-pressure low-density polyethylenes, linear low-density polyethylenes, and ultra-low-density polyethylenes. It is crucial that the middle layer is formed from a flexible resin so as to relax the stress concentration of bulges (protrusions), such as fisheyes, (which will be explained hereinafter) to an adherend as well as providing cushioning characteristics. Here, flexing modulus is one measure to determine the flexibility of a resin, and it is preferable that the flexing modulus is 500 MPa or less, or more preferably 300 MPa or less. A resin having a flexing modulus of 500 MPa or less facilitates to relax the stress of bulges, such as fisheyes, to an adherend, thus reducing dent damage thereto. Moreover, a resin having a flexing modulus of 20 MPa or more makes a surface protective film robust yet flexible and easy to handle, together with the resin composition constituting the back layer of the present invention, which will be explained hereinafter.

Among polyethylene-based resins, a high-pressure low-density polyethylene having a density of 0.910-0.935 g/cm$^3$ is particularly preferable, because the resin develops few fisheyes in itself and has excellent cushioning characteristics.

A linear low-density polyethylene having a density of 0.870-0.935 g/cm$^3$ is also preferable for ensuring that the middle layer is flexible and very expandable, while enabling speedy production of a thin film. Furthermore, a so-called ultra-low-density polyethylene having a density of 0.870-0.91 g/cm$^3$ is particularly preferable for use, for ensuring that the middle layer is flexible and provided with extremely good cushioning characteristics. In contrast, a resin with a density falling below 0.870 g/cm$^3$ is not desirable, because the resin is provided with too much flexibility, and lacks robustness when combined with the resin composition constituting the back layer described hereinafter, and therefore is less easy to handle. Examples of ultra-low-density polyethylenes such as the above are polyethylene plastomers using hexen-1 and octene-1 as comonomers, including "KERNEL®" by Japan Polyethylene Corp., "EXCELLEN™ VL" by Sumitomo Chemical Co., Ltd., "LUMITAC" by Tosoh Corp., and "AFFINITY™" and "NUC-FLX" by The Dow Chemical Company.

Moreover, the ethylene-methyl methacrylate copolymer used for the middle layer may be the same as or different from the resin constituting the aforementioned adhesive layer. The ethylene-methyl methacrylate copolymer is preferably as flexible as or more flexible than the abovementioned polyethylene-based resins. An ethylene-methyl methacrylate copolymer having a flexing modulus of 100 MPa or less is readily available.

In the surface protective film of the present invention, the resin constituting the aforementioned adhesive layer and the resin constituting the later-described back layer may be added and mixed in the resin constituting the abovementioned middle layer, which is a polyethylene-based resin having a density of 0.870-0.935 g/cm$^3$, an ethylene-methyl methacrylate copolymer, or a mixture thereof.

Generally speaking, when a film is produced by melt extrusion, portions having inconsistent thicknesses along the edges of the film are slit and removed during the slitting process, but it is more economical to use such portions for producing the middle layer in terms of saving the amount of raw materials. In this case, the resin composition constituting the later-described back layer is preferably added and mixed in the resin constituting the middle layer in a proportion of less than 30 wt%. Having an excessive content of the resin composition constituting the back layer, which is mainly of a polypropylene-based resin, makes it difficult to obtain the flexibility of the middle layer which is the essential feature of the present invention.

Incidentally, the middle layer of the present invention is formed from a polyethylene-based resin having a density of 0.870-0.935 g/cm3, an ethylene-methyl methacrylate copolymer, or a mixture thereof, the content of which is preferably 60 wt% or more, and more preferably 70 wt%, thereby providing the middle layer with flexibility to relax stress concentration of protruding defects, such as fisheyes. The abovementioned middle layer may also contain, as appropriate and to an extent not to inhibit the characteristics thereof, a filler, such as talc, stearic acid amide or calcium stearate, a lubricant, a UV absorber, a pigment, an antistatic agent, and a nucleating agent. These additives may be used individually, or two or more thereof may be used together.

Next, the requirements for the back layer of the present invention are as follows:

To be more specific, it is essential that the back layer of the present invention is formed from a polypropylene-based resin and a low-density polyethylene. Examples of polypropylene-based resins include homo polypropylene, a random or block copolymer of propylene and ethylene, and a propylene-ethylene-butene copolymer. With the purpose of providing the back layer with a roughened surface, which is a constitutive requirement by the present invention, it is preferable that a propylene-ethylene random copolymer is used solely, or combined with homo polypropylene.

A propylene-ethylene random copolymer such as the above preferably contains 1-7 wt% ethylene in terms of not only heat resistance but also slidability and film handling performance.

In addition, the melt flow rate ("MFR" hereinafter) of the polypropylene-based resin is preferably 5-50 g/10 min. at a temperature of 230°C and under a load of 2.16 kg/cm$^2$. In particular, a polypropylene-based resin having an MFR of 10-40 g/10 min. is more preferable for facilitating low-temperature extrusion and providing the back layer with a roughened surface by combining with the later-described low-density polyethylene. Incidentally, a mixed resin using two or more types of polypropylene-based resins may indicate an MFR if referable measured values are available, otherwise, the MFR of the mixed resin can be obtained by multiplying the log of each of the constituting resins by the ratio thereof and then totalling the multiplied values. Thus, when the MFR of resin is denoted as [A], the MFR of resin as [B], and the proportions thereof as X and Y respectively, the MFR of the resin mixture [C] is obtained using the following formula:

$$X \times \log [A] + Y \times \log [B] = \log [C].$$

Furthermore, it is preferable that the low-density polyethylene incorporated in the back layer has a density of 0.91-0.935 g/cm$^3$. Having a density exceeding 0.935 g/cm$^3$ would make the resin easy to come off the layer and create white powder when abraded against a metal roll or a rubber roll.

Incidentally, a low-density polyethylene such as the above may be the same as that used for the abovementioned middle layer, but in order to achieve the later-described surface roughness of the back layer, it is preferable to use a high-viscosity low-density polyethylene having an MFR of 0.5-5 g/10 min. at a temperature of 190°C and under a load of 2.16 kg/cm$^2$, and it is also desirable that the larger the difference between the MFR of the low-density polyethylene at a temperature of 190°C and the MFR of the polypropylene-based resin at a temperature of 230°C (for example, the difference could be 10 g/10 min. or more, or 20 g/10 min. or more to be more preferable), the more remarkable the surface roughening effect.

The mixture ratio (wt%) of the polypropylene-based resin and the low-density polyethylene in the back layer is selected from the range of 70:30 to 95:5 in order to achieve the target surface roughness.

The back layer of the present invention, which is formed from a composition such as the above, is characterized by having a roughened surface with an arithmetic average roughness (Ra) of 0.6 μm or more and a ten-point average roughness (Rz) of 4 μm or more in accordance with JIS B0601-1994. The surface roughening of the back layer provides excellent slidability between films and excellent blocking characteristics, as well as achieving the object of the present invention, i.e. eliminating dent defects in an adherend, by dispersing stress, which is caused by protruding fisheyes and concentrated against the adherend, while relaxing the stress concentration by taking the advantage of the cushioning characteristics of the middle layer.

Incidentally, it is essential that the use of other compounding ingredients for the back layer are limited to the minimum amount required; blending other compounding ingredients in an unnecessary amount would cause contamination in an adherend. The condition of a surface in terms of slidability and blocking characteristics is determined by constitutive requirements of a polymer. Generally, fine inorganic compound particles and the like are added for developing slidability, but the present invention facilitates to develop good slidability and blocking characteristics without blending such fine inorganic compound particles, while preventing such fine inorganic compound particles from damaging an adherend.

The surface protective film of the present invention has a structure which includes a back layer having a rough surface with an arithmetic average roughness (Ra) of 0.6 $\mu$m or more and a ten-point average roughness (Rz) of 4 $\mu$m, and an adhesive layer having, in contrast, a smooth surface with an arithmetic average roughness (Ra) of 0.2 $\mu$m or less and a ten-point average roughness (Rz) of 2 $\mu$m or less. This structure satisfies stable adhesion and excellent film handling performance at the same time. Surface roughness such as the above can be obtained by analyzing roughness profiles (roughness curves) which are measured typically using a surface roughness measuring instrument.

The method for producing the surface protective film of the present invention is explained as below:

The method for producing the surface protective film of the present invention is not particularly limited. For example, the resin composition for the adhesive layer, i.e. an ethylene-$\alpha$-olefin copolymer, an ethylene-methyl methacrylate copolymer, or a mixture thereof, the resin composition for the middle layer, i.e. primarily a polyethylene-based resin having a density of 0.870-0.935 g/cm$^3$, an ethylene-methyl methacrylate copolymer, or a mixture thereof, and the resin composition for the back surface layer, i.e. a mixed resin of a polypropylene-based resin and a low-density polyethylene, are melt-extruded individually by corresponding extruders, and laminated and integrated together in the die throuth a so-called three-layer co-extrusion step. The laminated and integrated layers are then extruded to form a three-layer laminated structure having an adhesive layer, a middle layer and a back layer, and the laminate, which is now a surface protective film, is taken up in a roll form. Another example of a method for producing the surface protective film is to first form the abovementioned adhesive layer, middle layer and the back layer individually by melt extrusion, and then integrate the layers by lamination.

Incidentally, the former example may employ a publicly-known method, such as the T-die method or the blow-extrusion method, and the latter may employ dry lamination, melt extrusion using a T-die, or extrusion coating. However, T-die melt extrusion is preferable in terms of high thickness precision and surface profile controlling, while ensuring high quality and cost efficiency.

The thickness of the surface protective film of the present invention varies depending on the thickness and required quality of an adherend, but is normally selected from the range of 20-100 $\mu$m in terms of formability and ease of use. A thickness of 20-50 $\mu$m is particularly preferable.

Meanwhile, the thickness of each of the adhesive layer, the middle layer and the back layer is adjusted as appropriate according to the required level, as described above, but in the three-layer laminated film of the present invention, it is preferable that the thickness ratio (%) of the adhesive layer, the middle layer and the back layer are 15-40: 81-45:4-15 respectively.

[Examples]

The invention is described in further detail on the basis of, but not limited to, the following examples. Incidentally, the symbol "%" used in the examples and the comparative examples refers to mass percent unless otherwise stated. In addition, the methods for measuring and evaluating physical properties are as described below:

(1) Surface roughness

A a high accuracy fine geometry measurement device, SURFCORDER ET4000A, manufactured by Kosaka Laboratory Ltd. was used for measuring surface roughness, in accordance with JIS B0601-1994. Here, 20 measurements were taken across a 2 mm length in the transverse direction (TD) at 10 $\mu$m intervals in the machine direction (MD) of a film, and three-dimensional surface roughness analysis was applied to obtain an arithmetic average roughness (Ra) (unit: $\mu$m) and a ten-point average roughness (Rz) (unit: $\mu$m). Incidentally, a diamond stylus with a 2.0 $\mu$m radius tip and a 60° vertex angle was also used, and measurements were taken using a 10 $\mu$N force and a 0.8 mm cut-off.

(2) Sticking film samples

Film samples were prepared, and used for the examples and the comparative examples after 24-hours storage and conditioning at a temperature of 23°C and 50% relative humidity. The film samples were each sticked to adherends by a roll-press device (a special pressure roller by Yasuda Seiki Seisakusho Ltd.) at a sticking pressure of 9,100 N/m and an sticking speed of 300 cm/min. The film-protected adherends were then stored for 24 hours at a temperature of 23°C and 50% relative humidity prior to being used for measuring and evaluation.

(3) Adhesion strength

A tensile tester ("TENSILON" universal tester by ORIENTEC Co., Ltd.) was used for measuring film adhesion strength at a pulling speed of 300 mm/min. and a peeling angle of 180°.

(4) Adhesion

The state in which an adherend and a film sample are adhered together was observed with the naked eye and the following were determined accordingly:
A: Completely adhered
B: Adhesion failed but in only a few places where the film sample is separated from the adherend (area ratio: 30% or less)
C: The film sample is separated from the adherend (area ratio: 70% or more).

(5) Contamination

After peeling a film sample from an adherend, the adherend was placed under a spotlight in a darkroom to observe with the naked eye the contaminated state of the surface thereof, and the following were determined accordingly:
A: No contamination
B: Slightly contaminated
C: Contaminated

(6) Transferability of fisheyes to the adherend (dents in the adherend)

The fisheye defects of the film samples were examined in advance, with reference to the dirt comparison chart developed by the National Printing Bureau, to identify fisheyes having sizes of 0.05-0.1 $mm^2$. A film including a portion containing identified fisheyes was then adhered to an adherend, and the film-protected adherend was secured at both sides thereof between smooth polycarbonate plates (thickness: 2 mm). A load of 1.3 $kg/cm^2$ was then applied, and the film-protected adherend was stored in an oven at a temperature of 60°C for three days. The film sample was finally peeled off the adherend and the adherend was examined for the presence of dents caused by the fisheyes. Incidentally, the film samples in which no fisheyes were visually detected were used "as is".
A: No fisheye-induced dents are present.
B: Only a few fisheye-induced dents are present.
C: Fisheye-induced dents are clearly present.

(7) MFR

Melt Indexer by Toyo Seiki Seisakusho, Ltd. was used for measuring the MFRs of the resins below using the following conditions in accordance with JIS K7210-1997: Polypropylene-based resin: temperature 230°C, load 2.16 $kg/cm^2$ Polyethylene-based resin and ethylene-methyl methacrylate: temperature 190°C, load 2.16 $kg/cm^2$
The unit g/10min. was used.

(Example 1)

The resins constituting the layers were prepared as follows:

Adhesive layer: an ethylene-hexene-1 copolymer (linear low-density polyethylene) containing a 1000 ppm phosphorus - based antioxidant and having a density of 0.922 $g/cm^3$, a melting point of 116°C, and an MFR of 5.0 g/10 min. at a temperature of 190°C
Middle layer: 91 wt% high-pressure low-density polyethylene having a density of 0.923 $g/cm^3$ and an MFR of 10 g/10 min. at a temperature of 190°C, which was mixed evenly, using a Henschel mixer, with the resin constituting the adhesive layer in a proportion of 6.6 wt% and the resin composition constituting the back layer,which will be described hereinafter, in a proportion of 2.4 wt% (on the assumption that unwanted edge portions are recycled from these layers) Back layer: 80 wt% ethylene-propylene random copolymer having an MFR of 35 g/10 min. at a temperature of 230°C and containing 5 wt% ethylene, which was mixed evenly, using a Henschel mixer, with 20 wt% low-density polyethylene having an MFR of 2 g/10 min. at a temperature of 190°C and a density of 0.92 g/cm$^3$

A three-layer co-extrusion T-die film-forming apparatus with a die-lip width of 2400 mm, which is equipped with three extruders having screw diameters of 90 mm (for the adhesive layer), 115 mm (for the middle layer) and 65 mm (for the back layer), was used, wherein the abovementioned prepared resin compositions were each placed in the extruders corresponding thereto with discharge amounts adjusted in proportion to the thicknesses of the layers, i.e. the adhesive layer 22%, the middle layer 70%, and the back surface layer 8%; and the resin compositions were extruded from the co-extrusion T-die at a temperature of 200°C to form a three-layer laminated film with a thickness of 35 μm, which was taken up in a roll form.

The film taken up in a roll form was then fed through a slitting machine to finally obtain a film sample with a width of 1600 mm and a length of 7,000 m, which was taken up in a roll form. Incidentally, during the slitting process to obtain the film sample with the predetermined width, the obtained film was required no treatment, such as releasing treatment, and passing the film sample through the slitting machine (i.e. winding off the film sample) was easy without any resistance, and no blocking was detected. If blocking occurs, it will normally be detected by scrunching noise of the adhesive layer and the back layer separated from each other, but no such peeling noise was heard and the winding-off of the film sample was confirmed to be extremely smooth.

The haze value of the obtained film was 51. The roughness of the surface of the adhesive layer was measured to be Ra 0.13 μm and Rz 1.4 μm, i.e. the surface was comparatively smooth, whereas the roughness of the surface of the back layer was measured to be Ra 1.2 μm and Rz 8.4 μm, i.e. the surface had an uneven profile.

A full width sheet of 1 m length was cut off the film sample to visually identify fisheyes therein, but no fisheyes having sizes of 100 μm or more were visually detected, i.e. the number of fisheyes was 0/m$^2$.

In simultaneous comparison with the film sample of the later-described comparative example 1, the film sample of example 1was then evaluated for the adhesion characteristics thereof, using a retardation film formed from a 100 μm thick cyclic olefin. The adhesion characteristics of the film sample to an adherend was very good with an adhesion strength of 0.08 N/50 mm, and no contamination was detected in the adherend after the film sample was peeled off the adherend.

Moreover, no fisheyes were visually present (i.e. with reference to the dirt comparison chart by the National Printing Bureau, the number of fisheyes having sizes of 0.05-0.1 mm$^2$ was 0/ m$^2$ and, the number of visually identifiable fisheyes having sizes of 100 μm or more was also 0/ m$^2$), and when the adherend was evaluated for the transferability of fisheyes (dents caused in the adherend), no dents were present in the adherend. In addition, the uneven roughness of the surface of the back layer also did not cause defects in the adherend.

(Comparative example 1)

The resin compositions constituting the layers were prepared as follows:

Adhesive layer: the same resin as that in example 1, i.e. ethylene-hexene-1 copolymer (linear low-density polyethylene)

Middle layer: 91 wt% high-density polyethylene having a density of 0.964 g/cm$^3$, a melting point of 135°C, and an MFR of 7.0 g/10 min. at a temperature of 190°C, which was mixed evenly, using a Henschel mixer, with the same ethylene-hexene-1 copolymer as that for the adhesive layer in a proportion of 6.6 wt% and the same resin composition as that for the back layer, which will be described hereinafter, in a proportion of 2.4 wt%

Back layer: 98 wt% homo polypropylene having a melting point of 163°C and an MFR of 7.5 g/10 min. at a temperature of 230°C, which was mixed evenly, using a Henschel mixer, with 2 wt% low-density polyethylene having an MFR of 2 g/10 min. at a temperature of 190°C and a density of 0.92 g/cm

Apart from the above, the three-layer co-extrusion T-die film-forming apparatus was used in the same way as in example 1 and a three-layer laminated film having a thickness of 35 μm was formed.

The haze value of the obtained film was 11. The film caused no blocking in the apparatus and was easy to rewind. The roughness of the surface of the adhesive layer was measured to be Ra 0.13 μm and Rz 0.51 μm, and the roughness of the surface of the back layer was measured to be Ra 0.14 μm and Rz 1.3 μm, i.e. both the adhesive layer and the back layer had a smooth surface.

The obtained film was evaluated for the presence of fisheyes in the same way as in example 1. The number of fisheyes having sizes of 0.05 mm$^2$ and more was 7/m$^2$, and the number of visually identifiable fisheyes having longitudinal diameters of approx. 100 $\mu$m or more was 280/ m$^2$.

In simultaneous comparison with the film sample in example 1, a portion containing fisheyes having sizes of 0.05 mm$^2$ was marked in the film sample of comparative example 1, and the marked portion was evaluated for the transferability of the fisheyes. It was confirmed subsequently that the fisheyes in the marked portion of the film of the comparative example 1 caused dents in the adherend thereof.

(Example 2)

The resin compositions constituting the layers were prepared as follows:

Adhesive layer: 40 wt% ethylene-hexene-1 copolymer (linear low-density polyethylene) containing 1000 ppm phosphorus - based antioxidant and having a density of 0.922 g/cm$^3$, a melting point of 116°C, and an MFR of 5.0 g/10 min. at a temperature of 190°C, which was mixed evenly, using a Henschel mixer, with 60 wt% ultra-low-density polyethylene containing 1200 ppm phenol-based antioxidant and having a density of 0.875 g/cm$^3$, a melting point of 71 °C, and an MFR of 3.0 g/10 min. at a temperature of 190°C
Middle layer: a low-density polyethylene having a density of 0.923 g/cm$^3$ and an MFR of 10 g/10 min. at a temperature of 190°C
Back layer: 45 wt% homo polypropylene having an MFR of 7.5 g/10 min. at a temperature of 230°C and a density of 0.90 g/cm$^3$, which was mixed evenly, using a Henschel mixer, with 45 wt% ethylene-propylene random copolymer having an MFR of 35 g/10 min. at a temperature of 230°C and containing 5 wt% ethylene and 10 wt% low-density polyethylene having an MFR of 2 g/10 min. at a temperature of 190°C and a density of 0.92 g/cm .

A three-layer co-extrusion T-die film-forming apparatus with a die-lip width of 2400 mm, which is equipped with three extruders having screw diameters of 90 mm (for the adhesive layer), 115 mm (for the middle layer) and 65 mm (for the back layer), was used, wherein the abovementioned prepared resin compositions were each placed in the extruders corresponding thereto with discharge amounts adjusted in proportion to the thicknesses of the layers, i.e. the adhesive layer 20%, the middle layer 72%, and the back layer 8%; and the resin compositions were extruded from the co-extrusion T-die at a temperature of 210°C to form a three-layer laminated film with a thickness of 30 $\mu$m, which was taken up in a roll form. The MFR of the polypropylene-based mixed resin constituting the back surface layer is 16.2 g/10 min. according to the previously-described calculation method.

The film taken up in a roll form was then fed through a slitting machine to finally obtain a film sample with a width of 1300 mm and a length of 3,000 m, which was taken up in a roll form. Incidentally, the slitting step to obtain the film sample with the predetermined width required no treatment such as releasing treatment, and passing the film sample through the slitting machine (i.e. winding off the film sample) was easy without any resistance, and no blocking was detected.

The haze value of the obtained film was 35. The roughness of the surface of the adhesive layer was measured to be Ra 0.08 $\mu$m and Rz 0.43 $\mu$m, i.e. the surface was comparatively smooth, whereas the roughness of the surface of the back layer was measured to be Ra 0.71 $\mu$m and Rz 5.3 $\mu$m, i.e. the surface had an uneven profile.

A full width sheet of 1 m length was cut off the film sample to visually identify fisheyes therein. The number of fisheyes having sizes of 0.05 mm$^2$ or more was 0/m$^2$, but much finer fisheyes having a longitudinal diameter of 100 $\mu$m or more were identified visually at a rate of one per 1 m$^2$.

In simultaneous comparison with the film of the later-described comparative example 2, the film sample was then evaluated for the adhesion characteristics thereof, by using a thin, smooth-surfaced polarizer with a thickness of a 100 $\mu$m. The adhesion characteristics of the film sample to an adherend was very good with an adhesion strength of 0.09 N/50 mm, and no contamination was detected in the adherend after the film sample was peeled off the adherend.

Moreover, when the adherend was evaluated for the transferability of fisheyes (dents caused in the adherend), no dents were present in the adherend. In addition, the uneven roughness of the surface of the back layer also did not cause defects in the adherend.

(Example 3)

For the adhesive layer, as an alternative to using 100 wt% ethylene-hexene-1 copolymer (linear low-density polyethylene), as in example 1, 60 wt% ethylene-methyl methacrylate copolymer copolymerized with 10 wt% MMA having a density of 0.93 g/cm$^3$ and an MFR of 7 g/10 min. at a temperature of 190°C was used together with 40 wt% ethylene-hexene-1 copolymer, which was also used in example 1. The same ethylene-methyl methacrylate copolymer as that for the adhesive layer was used for the middle layer. Apart from the above, the same procedure as in example 1 was carried out to obtain a three-layer laminated film with a thickness of 35$\mu$m, and the film was taken up in a roll form.

The film taken up in a roll form was then fed through a slitting machine to finally obtain a film sample with a width of 1600 mm and a length of 7,000 m, which was taken up in a roll form.

Incidentally, with regards to the wind-off characteristics of the rolled film sample, the film sample was easy to wind off without applying any particular level of tension.

The haze value of the obtained film was 50. The roughness of the surface of the adhesive layer was measured to be Ra 0.12 μm and Rz 1.3 μm, i.e. the surface was comparatively smooth, whereas the roughness of the surface of the back layer was measured to be Ra 1.1 μm and Rz 8.1 μm, i.e. the surface had an uneven profile.

A full width sheet of 1 m length was cut off the film sample to visually identify fisheyes therein, and no fisheyes having longitudinal diameters of 100 μm or more were visually detected, i.e. the number of fisheyes was 0/m$^2$.

The film sample was then evaluated for the adhesion characteristics thereof, in the same way as in example 2, by using a retardation film formed from a 100 μm thick cyclic olefin. The adhesion characteristics of the film sample to an adherend was very good with an adhesion strength of 0.09 N/50 mm, and no contamination was detected in the adherend after the film sample was peeled off the adherend.

Moreover, similarly to example 1, no fisheyes were visibly present in the film sample, and when the adherend was evaluated for the transferability of fisheyes (dents caused in the adherend), no dents were present in the adherend. In addition, the uneven roughness of the surface of the back layer also did not cause defects in the adherend.

(Example 4)

For the adhesive layer, 100 wt% ethylene-methyl methacrylate copolymer copolymerized with a 10 wt% MMA having an MFR of 7 g/10 min. at a temperature of 190°C was used, and apart from that, the same procedure as in example 1 was carried out to obtain a three-layer laminated film having a thickness of 35 μm, a width of 1600 mm and a length of 7,000 m. Incidentally, during the slitting process to obtain the film sample with the predetermined width, passing the film sample through the slitting machine (i.e. winding off the film sample) was easy without any resistance, and no blocking was detected.

The haze value of the obtained film was 51. The roughness of the surface of the adhesive layer was measured to be Ra 0.14 μm and Rz 1.5 μm, i.e. the surface was comparatively smooth, whereas the roughness of the surface of the back layer was measured to be Ra 1.2 μm and Rz 8.4 μm, i.e. the surface had an uneven profile.

A full width sheet of 1 m length was cut off the film sample to visually identify fisheyes therein, and no fisheyes having longitudinal diameters of 100 μm or more were visually detected, i.e. the number of fisheyes was 0/m$^2$.

The film sample was then evaluated for the adhesion characteristics thereof, in the same way as in example 1, by using a retardation film formed from a 100 μm thick cyclic olefin. The adhesion strength of the film sample was 0.12 N/50 mm, and no contamination was detected in the adherend after the film sample was peeled off the adherend.

Moreover, similarly to example 1, no fisheyes were visibly present in the film sample, and therefore the film sample was used "as prepared" for the evaluation of the transferability of fisheyes (dents caused in the adherend), and no dents were present in the adherend. In addition, the uneven roughness of the surface of the back layer also did not cause defects in the adherend.

(Comparative example 2)

The resin compositions constituting the layers were prepared as follows:

Adhesive layer: the same ethylene-hexene-1 copolymer (linear low-density polyethylene) as that in comparative example 1

Middle layer: a high-density polyethylene having a density of 0.964 g/cm$^3$, a melting point of 134°C and an MFR of 7.5 g/10 min. at a temperature of 190°C

Back layer: 94 wt% low-density polyethylene having an MFR of 5.5 g/10 min. at a temperature of 190°C and a density of 0.923 g/cm$^3$, 1 wt% low-density polyethylene having an MFR of 2 g/10 min. at a temperature of 190°C and a density of 0.92 g/cm$^3$ and 4 wt% ethylene-propylene random copolymer having an MFR of 40 g/10 min. at a temperature of 230°C and containing 5 wt% ethylene are mixed evenly, using a Henschel mixer, with a lubricant containing 1.0 wt% sodium calcium aluminosilicate powder having a mean particle diameter of 2.0 μm The same three-layer co-extrusion T-die film-forming apparatus as in example 2 was used to form a three-layer laminated film having a thickness of 30 μm.

The haze value of the obtained film was 12. The film caused no blocking in the apparatus and was easy to rewind. The roughness of the surface of the adhesive layer was measured to be Ra 0.09 μm and Rz 0.48 μm, and the roughness of the surface of the back layer was measured to be Ra 0.12 μm and Rz 2.4 μm, i.e. both the adhesive layer and the back layer had a comparatively smooth surface.

In the same way as in example 2, the obtained film was evaluated for the presence of fisheyes. The number of fisheyes having sizes of 0.05-0.1mm² was 13/m², and the number of visually identifiable fisheyes having longitudinal diameters of approx. 100 μm or more was 220/ m².

In simultaneous comparison with the film sample of the aforementioned example 2, the film sample of comparative example 2 was evaluated for the transferability of fisheyes therein, and it was found that the fisheye portions of the film of comparative example 2 caused dents in the adherend thereof.

(Examples 5, 6 and 7)

In example 5, the same resin composition as that for the adhesive layer in example 2 was used for the middle layer, i.e. ultra-low-density polyethylene having a density of 0.875 g/cm³ and an MFR of 3g/10 min., and apart from that, the same procedure as in example 1 was carried out to obtain a film sample.

Furthermore, in example 6, a linear low-density polyethylene (a butene-1 copolymer) having a density of 0.934 g/cm and an MFR of 5g/10 min. was used for the middle layer, and apart from that, the same procedure as in example 1 was carried out to obtain a film sample.

Moreover, in example 7, 60 wt% high-pressure low-density polyethylene having a density of 0.923 g/cm³ and an MFR of 10 g/10 min. at a temperature of 190°C, which was mixed evenly, using a Henschel mixer, with 40 wt% resin composition identical to that for the back layer in example 1, was used for the middle layer. Apart from that, the same procedure as in example 1 was carried out to obtain a film sample.

During the slitting process to complete the film samples with the predetermined widths in examples 5, 6 and 7, the unwinding of the film samples was smooth in all of the examples, and the film samples were excellent in terms of slidability and blocking characteristics.

The characteristics of each of the film sample are shown in Table 1, and similarly to example 1, no fisheyes were visually identified.

Incidentally, the same adherend as that in example 1 was used for the evaluation of the transferability of fisheyes. The fisheyes in the film sample did not cause dents in the adherend either in example 5 or in example 6, whereas in example 7, slight fisheye-induced dents were observed.

| Composition | Unit | | Example 1 | | Example 2 | | Example 3 | | Example 4 | | Example 5 | | Example 6 | | Example 7 | | Comparative example 1 | | Comparative example 2 | |
|---|---|---|---|---|---|---|---|---|---|---|---|---|---|---|---|---|---|---|---|---|
| Ethylene/α-olefin copolymer (linear low-density polyethylene) | wt% | g/cm³ | 100 | 0.922 | 40 | 0.922 | 40 | 0.922 | | | 100 | 0.922 | 100 | 0.922 | 100 | 0.922 | 100 | 0.922 | 100 | 0.922 |
| Ethylene/α-olefin copolymer (ultra-low-density polyethylene) | wt% | g/cm³ | | | 60 | 0.875 | | | | | | | | | | | | | | |
| MMA copolymer | wt% | MMAwt% | | | | | 60 | 10 | 100 | 10 | | | | | | | | | | |
| Polyethylene-based resin | wt% | g/cm³ | 91 | 0.923 | 100 | 0.923 | | | 91 | 0.923 | 100 | 0.875 | 100 | 0.934 | 60 | 0.923 | 91 | 0.964 | 100 | 0.964 |
| MMA copolymer | wt% | MMAwt% | | | | | 100 | 10 | | | | | | | | | | | | |
| Polyethylene-based resin (linear low-density polyethylene) | wt% | g/cm³ | 6.6 | 0.922 | | | | | 6.6 | 0.922 | | | | | | | 6.6 | 0.922 | | |
| Polypropylene-based resin | wt% | | 2.4 | | | | | | 2.4 | | | | | | 40 | | 2.4 | | | |
| Polyethylene-based resin (low density polyethylene) | wt% | | | | | | | | | | | | | | | | | | | |
| Polypropylene-based resin | wt% | g/10 min. | 80 | 35 | 90 | 16.2 | 80 | 35 | 80 | 35 | 80 | 35 | 80 | 35 | 80 | 35 | 98 | 7.5 | 4 | 35 |
| low-density polyethylene | wt% | g/10 min. | 20 | 2 | 10 | 2 | 20 | 2 | 20 | 2 | 20 | 2 | 20 | 2 | 20 | 2 | 2 | 2 | 95 | 5.4 |
| Inorganic particles | wt% | | | | | | | | | | | | | | | | | | 1 | |
| Adhesive layer surface roughness Ra | μm | | 0.13 | | 0.08 | | 0.12 | | 0.14 | | 0.13 | | 0.13 | | 0.12 | | 0.13 | | 0.09 | |
| Rz | μm | | 1.4 | | 0.43 | | 1.3 | | 1.5 | | 1.4 | | 1.4 | | 1.3 | | 0.51 | | 0.48 | |
| Back layer surface roughness Ra | μm | | 1.2 | | 0.71 | | 1.1 | | 1.2 | | 1.1 | | 1.1 | | 1.0 | | 0.14 | | 0.12 | |
| Rz | μm | | 8.4 | | 5.3 | | 8.1 | | 8.4 | | 8.2 | | 8.2 | | 8.0 | | 1.30 | | 2.4 | |
| Haze value of film | | | 51 | | 35 | | 50 | | 51 | | 51 | | 51 | | 53 | | 11 | | 12 | |
| Adhesion strength to adherend | N/50mm | | 0.08 | | 0.09 | | 0.09 | | 0.12 | | 0.10 | | 0.07 | | 0.06 | | 0.10 | | 0.09 | |
| 0.05-0.1mm² fisheyes | No./m² | | 0 | | 0 | | 0 | | 0 | | 0 | | 0 | | 0 | | 7 | | 13 | |
| Visible fisheyes | No./m² | | 0 | | 1 | | 0 | | 0 | | 0 | | 0 | | 0 | | 280 | | 220 | |
| Fisheye transcription | - | | A | | A | | A | | A | | A | | A | | B | | C | | C | |
| Blocking resistance | - | | A | | A | | A | | A | | A | | A | | A | | A | | A | |

Claims

1. A surface protective film comprising a three-layer laminated structure including an adhesive layer, a middle layer and a back layer, wherein the adhesive layer is formed from at least one selected from the group of an ethylene-$\alpha$-olefin copolymer and an ethylene-methyl methacrylate copolymer, the middle layer containing at least one selected from the group of a polyethylene-based resin having a density of 0.870-0.935 g/cm$^3$ and an ethylene-methyl methacrylate copolymer, and the back layer comprising a polypropylene-based resin and a low-density polyethylene, and also wherein the back layer has a surface with an arithmetic average roughness (Ra) of 0.6 $\mu$m or more and a ten-point average roughness (Rz) of 4 $\mu$m or more.

2. A surface protective film according to claim 1, wherein the melt flow rate of the polypropylene-based resin constituting the back layer is 5-50 g/10 min. at a temperature of 230°C and under a load of 2.16 kg/cm$^2$, and the melt flow rate of the low-density polyethylene constituting the back layer is 0.5-5 g/10 min. at a temperature of 190°C and under a load of 2.16 kg/cm$^2$.

3. A surface protective film according to claim 1 or claim 2 comprising a three-layer laminated structure including an adhesive layer, a middle layer and a back layer, wherein the middle layer is formed from at least one selected from the group of a polyethylene-based resin having a density of 0.870-0.935 g/cm$^3$ and an ethylene-methyl methacrylate copolymer, and a resin mixture composition comprising the resin constituting the adhesive layer and the resin constituting the back layer.

## INTERNATIONAL SEARCH REPORT

| International application No. |
|---|
| PCT/JP2011/055627 |

**A. CLASSIFICATION OF SUBJECT MATTER**
*C09J7/02*(2006.01)i, *B32B27/28*(2006.01)i, *B32B27/32*(2006.01)i, *C09J123/08* (2006.01)i

According to International Patent Classification (IPC) or to both national classification and IPC

**B. FIELDS SEARCHED**

Minimum documentation searched (classification system followed by classification symbols)
C09J1/00-201/10, B32B1/00-35/00

Documentation searched other than minimum documentation to the extent that such documents are included in the fields searched
Jitsuyo Shinan Koho        1922-1996   Jitsuyo Shinan Toroku Koho    1996-2011
Kokai Jitsuyo Shinan Koho   1971-2011   Toroku Jitsuyo Shinan Koho    1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2009-166277 A (DIC Corp.), 30 July 2009 (30.07.2009), claims 1 to 5; paragraph [0025]; examples 7 to 11 & WO 2009/087797 A1 & KR 10-2010-0046267 A | 1-3 |
| Y | JP 2002-001883 A (Gunze Ltd.), 08 January 2002 (08.01.2002), claims 1 to 5; paragraphs [0017] to [0018] (Family: none) | 1-3 |
| Y | JP 2010-076287 A (Hitachi Chemical Co., Ltd.), 08 April 2010 (08.04.2010), claims 1 to 5; paragraph [0013] (Family: none) | 1-3 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 March, 2011 (25.03.11) | 19 April, 2011 (19.04.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2011/055627 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2008-068564 A (Dainippon Ink And Chemicals, Inc.), 27 March 2008 (27.03.2008), claims 1 to 7; paragraph [0020] (Family: none) | 1-3 |
| Y A | JP 2008-030349 A (Toray Advanced Film Co., Ltd.), 14 February 2008 (14.02.2008), claims 1 to 6; paragraphs [0031] to [0032] (Family: none) | 3 1-2 |
| A | JP 09-111208 A (Sekisui Chemical Co., Ltd.), 28 April 1997 (28.04.1997), claims 1 to 3 (Family: none) | 1-3 |
| A | JP 2009-170478 A (Gunze Ltd.), 30 July 2009 (30.07.2009), claims 1 to 2 (Family: none) | 1-3 |
| A | JP 08-323942 A (Toray Plastic Films Co., Ltd.), 10 December 1996 (10.12.1996), claims 1 to 4 (Family: none) | 1-3 |
| A | JP 2010-042665 A (Sun·Tox Co., Ltd.), 25 February 2010 (25.02.2010), claims 1 to 6 & KR 10-2010-0008348 A | 1-3 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI0347886 A
- JP HEI0455488 A
- JP HEI05239418 A
- JP SHO55165974 A
- JP 2008030349 A
- JP HEI09111208 A
- JP 2009143215 A